# EUROPÄISCHE PATENTSCHRIFT

(11) **EP 3 322 586 B1**
(45) Veröffentlichungstag und Bekanntmachung des Hinweises auf die Patenterteilung: **05.06.2019**
(21) Anmeldenummer: 16738752.1
(22) Anmeldetag: 12.07.2016
(51) Int. Cl.: B32B 5/02, B32B 5/26, B32B 1/08, B60R 13/08, D06M 17/00

(54) **WÄRMESCHUTZPRODUKT**
HEAT PROTECTION PRODUCT
PRODUIT DE PROTECTION THERMIQUE

(30) Priorität: 14.07.2015 EP 15176690
(43) Veröffentlichungstag der Anmeldung: 23.05.2018
(73) Patentinhaber: Zipper-Technik GmbH, 63263 Neu-Isenburg (DE)
(72) Erfinder: REUSSWIG, Frank, 63579 Freigericht (DE); PLUMMER, Sean, Phoenix, Arizona 85048 (US)
(74) Vertreter: dompatent von Kreisler Selting Werner - Partnerschaft von Patent- und Rechtsanwälten mbB
(86) Internationale Anmeldenummer: PCT/EP2016/066542
(87) Internationale Veröffentlichungsnummer: WO 2017/009339

(56) Entgegenhaltungen:
- DE-A1- 19 720 537
- DE-A1- 19 755 314

## Beschreibung

Die vorliegende Erfindung betrifft ein Wärmeschutzprodukt und ein Verfahren zu seiner Herstellung.

Wärmeabschirmende oder wärmeschützende Produkte werden beispielsweise im Kraftfahrzeugbereich eingesetzt. Diese werden benutzt, um temperaturempfindliche Bauteile (beispielsweise Sensoren, Kabel, Schläuche, Stecker, Elektronik) vor der Abwärme anderer Bauteile (beispielsweise der Abgasanlagen) zu schützen oder um ein Medium, das innerhalb eines an sich hitzebeständigen Bauteils geführt wird, zu schützen.

DE 197 55 314 beschreibt beispielsweise ein solches Bauteil.

DE 197 20 537 beschreibt Verkleidungen von Einbauteilen, Karosserieteilen oder dergleichen in Automobilen.

Entsprechende Wärmeschutzprodukte müssen in vielen Fällen definierte Formen einnehmen, um die temperaturempfindlichen Bauteile zu umschließen. Hierzu werden üblicherweise Nähte und Nieten verwendet. Es zeigt sich, dass entsprechende Produkte an diesen Verbindungsstellen abweichende Isolationseigenschaften aufweisen. Diese Stellen können insbesondere auch wasser- und/oder luftdurchlässig sein. Es besteht daher Bedarf nach Elementen, die verbesserte Nähe aufweisen.

Aufgabe der vorliegenden Erfindung war es, verbesserte Wärmeschutzprodukte herzustellen. Gelöst wird die Aufgabe durch ein Wärmeschutzprodukt mit mindestens einer Naht umfassend mindestens
- eine Textilschicht aus Polymerfasern aus einem thermoplastischen Material
- eine Polymerschicht
- eine Metallschicht,
wobei die mindestens eine Naht durch Schweißen erhalten wird.

Erfindungsgemäß wird also ein Wärmeschutzprodukt bereit gestellt, das eine Textilschicht aus Polymerfasern aus einem thermoplastischen Material aufweist. Geeignete Polymere sind insbesondere Polyester, Polyolefine wie Polyethylen oder Polypropylen, Polyacrylnitrile, Polyamide, Polysulfonamide und Mischungen und Copolymerisate davon. In einer solchen Textilschicht können auch Fasern verschiedener Polymere miteinander vermischt sein.

Die Textilschicht kann ein Gewebe, Gestricke, Gewirke, Gefüge, Gelege sein. Bevorzugt handelt es sich um einen Filz.

Es hat sich als geeignet erwiesen, wenn die Dicke der Textilschicht im Bereich von etwa 1 bis 10 mm liegt.

Weiterhin umfasst das Wärmeschutzprodukt eine weitere Polymerschicht. Hierfür haben sich insbesondere Polyolefine, Polyester, Acrylnitril-Butadienstyrol (ABS) und Mischungen hiervon als geeignet erwiesen.

Bevorzugte Polyester sind Polyethylenterephthalate und bevorzugte Polyolefine sind Polyethylen, Polypropylen, Polyvinylchlorid und Mischungen und Copolymerisate davon. Der Begriff Copolymerisate im Sinne dieser Anmeldung umfasst auch Polymerisate von mehr als zwei Monomeren.

Die Polymerschicht kann beispielsweise die Form einer Polymerfolie annehmen.

Weiterhin umfasst das Wärmeschutzprodukt eine Metallschicht; diese kann eine Metallfolie sein oder durch eine Gasphasenabscheidung aufgebracht werden.

In einer Ausführungsform weist das Produkt folgenden Schichtaufbau auf:
- Textilschicht aus Polymerfasern aus einem thermoplastischen Material
- Polymerschicht mit einer durch Gasphasenabscheidung aufgebrachten Metallschicht

In einer anderen Ausführungsform umfasst der Aufbau
- Textilschicht aus Polymerfasern aus einem thermoplastischen Material
- Metallfolie
- eine Polymerschicht mit einer durch Gasphasenabscheidung aufgebrachten Metallschicht.

In Aufbauten, in denen eine Gasphasenabscheidung des Metalls auf der Polymerfolie vorhanden ist, kann diese Gasphasenabscheidung auf einer oder auf beiden Seiten vorhanden sein.

Bevorzugt ist der Aufbau so, dass die Textilschicht aus Polymerfasern aus einem thermoplastischen Material auf der einen Seite ist und eine aufgedampfte Metallschicht auf der anderen Seite der Polymerfolie ist und anschließend zu einem Wärmeschutzprodukt mit einer Hilfe einer Naht geformt wird.

Verbundfolien, die eine Metallschicht und eine gegebenenfalls ein- oder beidseitig metallisierte Polymerschicht umfassen, sind handelsüblich. Typischerweise beträgt die Stärke einer solchen Verbundfolie zwischen 15 und 50 µm. Typisch ist beispielsweise die Verwendung einer 20 µm dicken Verbundfolie, die eine 7 µm Aluminiumschicht, eine 1 µm Klebstoffschicht und eine 12 µm Polymerschicht umfasst.

Im Falle von aufgedampften Metallschichten beträgt die Stärke typischerweise 20 - 50 nm.

Das Wärmeschutzprodukt kann selbstverständlich weitere Schichten aufweisen, beispielsweise weitere Metall- oder Kunststoffschichten oder Schichten von anorganischen Materialien wie Glasfasergeweben.

Der Verbund zwischen den einzelnen Schichten erfolgt typischerweise durch Verkleben; bevorzugte Klebstoffe sind Acrylate, Polyurethane und Silikone.

Weiterhin weist das Wärmeschutzprodukt mindestens eine Naht auf. Eine Naht führt dazu, dass der flächige Aufbau eine dreidimensionale Form annimmt. Verschweißt wird die Textilschicht mit der Textilschicht. Bevorzugt ist das Wärmeschutzprodukt schlauchförmig.

Anstatt - wie im Stand der Technik - die Naht durch ein Nahtmaterial oder Ösen/Nieten herzustellen, wird sie im vorliegenden Fall durch Schweißen hergestellt. Als Schweißverfahren sind beispielsweise Ultraschallschweißen, Hochfrequenzschweißen, Heißluftschweißen oder Reibschweißen geeignet. Hierdurch wird das thermoplastische Material in eine Form gebracht, die es erlaubt, die Schichtmaterialien des Wärmeschutzproduktes miteinander zu verschweißen.

Anders als eine durch Ösen, Nieten oder Fäden hergestellte Naht werden die erfindungsgemäß erhaltenen Nähte weitestgehend wasser- und luftundurchlässig. Der Eintritt von Wasser in Wärmeschutzelemente kann erheblich die Isolationswirkung herabsetzen. Auch der Eintritt von Luft kann durch Konvektion nachteilig sein.

Die Erfindung wird durch die nachfolgenden Figuren näher erläutert:
Figur 1 zeigt einen Hitzeschutzflachschlauch. Hierzu wird ein Folienmaterial, das einen Polyesterfilz 1, einen Kleber 2 sowie eine beidseitig aluminisierte PET-Folie 3 umfasst, in zwei Bahnen geschnitten und dann an den Seiten mit Ultraschweißnähten 10 versehen. Solche Hitzeschutzflachschläuche können praktisch endlos gefertigt werden und eignen sich insbesondere zur Isolation von Flachbandkabeln.
Figur 2 zeigt einen Hitzeschutzrundschlauch.
Figur 3 zeigt den Aufbau des Materials des Hitzeschutzrundschlauchs. Ein Polyesterfilz 1 ist mit Aluminiumfolie 4 und einer aluminisierten PET-Folie 3 durch Klebstoffschichten 2 verbunden. Das Material wird zu einem Schlauch geformt und durch Ultraschweißnaht 10 verschlossen. Ein solches Material eignet sich insbesondere zum Schutz von Kühlwasserschläuchen.

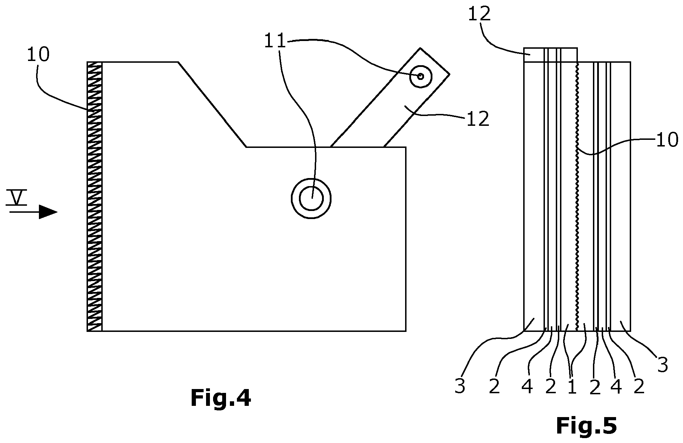

Figur 4 zeigt eine Hitzeschutztasche.
Figur 5 zeigt eine Seitenansicht der Hitzeschutztasche.

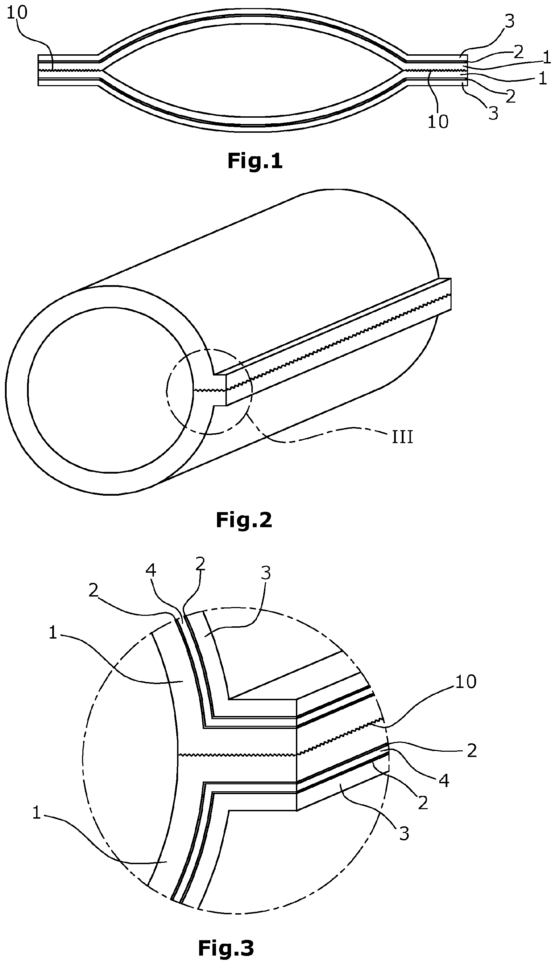

Diese Tasche wird erhalten durch ein Material wie es zur Figur 3 beschrieben ist, umfassend einen Polyesterfilz, eine Aluminiumfolie und eine aluminiserte PET-Folie, die jeweils mit Kleber verbunden sind. Diese werden zusammengefügt und mit einer Schweißnaht 10 versehen.

Die erfindungsgemäße Hitzeschutztasche weist noch eine Lasche 12 auf, die mit Hilfe eines Edelstahldruckknopfs 11 geschlossen werden kann. Hiermit können beispielsweise Konnektoren in Automobilen zur Zuführung von Medien für SCR Katalysatoren temperiert werden.

## Patentansprüche

1. Wärmeschutzprodukt mit mindestens einer Naht umfassend mindestens
- eine Textilschicht aus Polymerfasern aus einem thermoplastischen Material
- eine Polymerschicht
- eine Metallschicht,
wobei die mindestens eine Naht durch Schweißen erhalten wird.

2. Wärmeschutzprodukt nach Anspruch 1, **dadurch gekennzeichnet, dass** die Textilschicht aus organischen Polymerfasern besteht.

3. Wärmeschutzprodukt nach Anspruch 1 oder 2, wobei das Schweißen ein Ultraschallschweißen, ein Hochfrequenzschweißen, ein Heißluftschweißen oder ein Reibschweißen ist.

4. Wärmeschutzprodukt nach Anspruch 2 oder 3, **dadurch gekennzeichnet, dass** die Polymerfasern der Textilschicht aus der Gruppe der Polyester, Polyolefine, Polyacrylnitrile, Polyamide, Polysulfonamide und Mischungen und Copolymeren ausgewählt werden.

5. Wärmeschutzprodukt nach einem der Ansprüche 1 bis 4, **dadurch gekennzeichnet, dass** die Textilschicht ein Gewebe, Gestricke, Gewirke, Gefüge oder Gelege ist, insbesondere ein Filz ist.

6. Wärmeschutzprodukt nach mindestens einem der Ansprüche 1 bis 5, wobei das Material der Polymerschicht ausgewählt wird aus Polyolefinen, Polyestern, Acrylnitril-Butadienstyrol (ABS) und Mischungen und Copolymeren ausgewählt wird.

7. Wärmeschutzprodukt nach Anspruch 6, **dadurch gekennzeichnet, dass** der Polyester Polyethylenterephthalat ist oder das Polyolefin Polyethylen, Polypropylen oder Polyvinylchlorid ist.

8. Wärmeschutzprodukt nach einem der Ansprüche 1 bis 7, wobei die Polymerschicht eine Polymerfolie ist.

9. Wärmeschutzprodukt nach einem der Ansprüche 1 bis 8, wobei die Metallschicht eine Metallfolie ist oder durch Gasphasenabscheidung aufgebracht wurde.

10. Wärmeschutzprodukt nach einem der Ansprüche 1 bis 9, **dadurch gekennzeichnet, dass** das Wärmeschutzprodukt schlauchförmig ist.

11. Wärmeschutzprodukt nach einem der Ansprüche 1 bis 10, **dadurch gekennzeichnet, dass** der Aufbau wie folgt ist:
- Polymerschicht mit einer ein- oder beidseitigen Metallschicht
- Textilschicht aus Polymerfasern aus einem thermoplastischen Material

12. Wärmeschutzprodukt nach einem der Ansprüche 1 bis 10, **dadurch gekennzeichnet, dass** der Aufbau wie folgt ist:
- Polymerschicht mit einer ein- oder beidseitigen Metallschicht
- Metallfolie
- Textilschicht aus Polymerfasern aus einem thermoplastischen Material.

13. Wärmeschutzprodukt nach einem der Ansprüche 1 bis 10, **dadurch gekennzeichnet, dass** der Aufbau wie folgt ist:
- Metallfolie
- Polymerschicht mit einer ein- oder beidseitigen Metallschicht
- Textilschicht aus Polymerfasern aus einem thermoplastischen Material.

14. Verwendung eines Wärmeschutzprodukts nach einem der Ansprüch 1 bis 13 als Wärmeschutz in Kraftfahrzeugen.

## Claims

1. A heat protection product with at least one seam, comprising at least
- a textile layer of polymer fibers from a thermoplastic material;
- a polymer layer;
- a metal layer;
wherein said at least one seam is obtained by welding.

2. The heat protection product according to claim 1, **characterized in that** said textile layer consists of organic polymer fibers.

3. The heat protection product according to claim 1 or 2, wherein said welding is ultrasonic welding, high frequency welding, hot air welding, or friction welding.

4. The heat protection product according to claim 2 or 3, **characterized in that** said polymer fibers of the textile layer are selected from the group consisting of polyesters, polyolefins, polyacrylonitriles, polyamides, polysulfonamides, and mixtures and copolymers thereof.

5. The heat protection product according to any of claims 1 to 4, **characterized in that** said textile layer is a woven fabric, a loop-formingly or loop-drawingly knitted fabric, a structured fabric, or a non-woven scrim, especially a felt.

6. The heat protection product according to at least one of claims 1 to 5, wherein the material of said polymer layer is selected from polyolefins, polyesters, acrylonitrile-butadiene-styrene (ABS), and mixtures and copolymers thereof.

7. The heat protection product according to claim 6, **characterized in that** said polyester is polyethylene terephthalate, or said polyolefin is polyethylene, polypropylene, or poly(vinyl chloride).

8. The heat protection product according to any of claims 1 to 7, wherein said polymer layer is a polymer sheet.

9. The heat protection product according to any of claims 1 to 8, wherein said metal layer is a metal foil, or has been applied by vapor deposition.

10. The heat protection product according to any of claims 1 to 9, **characterized in that** said heat protection product is tubular in shape.

11. The heat protection product according to any of claims 1 to 10, **characterized in that** the structure is as follows:
- a polymer layer with a metal layer on one or both sides thereof;
- a textile layer of polymer fibers from a thermoplastic material.

12. The heat protection product according to any of claims 1 to 10, **characterized in that** the structure is as follows:
- a polymer layer with a metal layer on one or both sides thereof;
- a metal foil;
- a textile layer of polymer fibers from a thermoplastic material.

13. The heat protection product according to any of claims 1 to 10, **characterized in that** the structure is as follows:
- a metal foil;
- a polymer layer with a metal layer on one or both sides thereof;
- a textile layer of polymer fibers from a thermoplastic material.

14. Use of a heat protection product according to any of claims 1 to 13 as a heat protection element in motor vehicles.

## Revendications

1. Produit d'isolation thermique avec au moins un joint, comprenant au moins
- une couche textile en fibres polymères d'un matériau thermoplastique
- une couche polymère
- une couche métallique,
le au moins un joint étant obtenu par soudage.

2. Produit d'isolation thermique selon la revendication 1, **caractérisé en ce que** la couche textile se compose de fibres polymères organiques.

3. Produit d'isolation thermique selon la revendication 1 ou 2, le soudage étant un soudage par ultrasons, un soudage haute fréquence, un soudage à air chaud ou un soudage par friction.

4. Produit d'isolation thermique selon la revendication 2 ou 3, **caractérisé en ce que** les fibres polymères de la couche textile sont sélectionnées dans le groupe des polyesters, polyoléfines, polyacrylonitriles, polyamides, polysulfonamides et leurs mélanges et copolymères.

5. Produit d'isolation thermique selon l'une des revendications 1 à 4, **caractérisé en ce que** la couche textile est un produit tissé, tricoté, maillé, texturé ou nappé, en particulier un feutre.

6. Produit d'isolation thermique selon l'une des revendications 1 à 5, dans lequel le matériau de la couche polymère est sélectionné parmi des polyoléfines, polyesters, des acrylonitrile butadiène styrènes (ABS) et leurs mélanges et copolymères.

7. Produit d'isolation thermique selon la revendication 6, **caractérisé en ce que** le polyester est du poly(téréphtalate d'éthylène), ou le polyoéfine est du polyéthylène, du polypropylène ou du poly(chlorure de vinyle).

8. Produit d'isolation thermique selon l'une des revendications 1 à 7, dans lequel la couche polymère est un film polymère.

9. Produit d'isolation thermique selon l'une des revendications 1 à 8, dans lequel la couche métallique est un film métallique ou est appliquée par dépôt en phase vapeur.

10. Produit d'isolation thermique selon l'une des revendications 1 à 9, **caractérisé en ce que** le produit d'isolation thermique est en forme de tuyau.

11. Produit d'isolation thermique selon l'une des revendications 1 à 10, **caractérisé en ce que** la structure est la suivante :
- couche polymère avec une couche métallique sur un ou sur deux côtés
- couche textile en fibres polymères d'un matériau thermoplastique.

12. Produit d'isolation thermique selon l'une des revendications 1 à 10, **caractérisé en ce que** la structure est la suivante :
- couche polymère avec une couche métallique sur un ou sur deux côtés
- film métallique
- couche textile en fibres polymères d'un matériau thermoplastique.

13. Produit d'isolation thermique selon l'une des revendications 1 à 10, **caractérisé en ce que** la structure est la suivante :
- film métallique
- couche polymère avec une couche métallique sur un ou sur deux côtés
- couche textile en fibres polymères d'un matériau thermoplastique.

14. Utilisation d'un produit d'isolation thermique selon l'une des revendications 1 à 13 en tant qu'isolation thermique dans des véhicules automobiles.
